# EUROPEAN PATENT APPLICATION

(11) **EP 2 075 057 A1**
(43) Date of publication of application: **01.07.2009**
(21) Application number: 07024899.2
(22) Date of filing: 21.12.2007
(51) Int. Cl.: B01J 8/02

(54) **Radial isothermal chemical reactor**

(71) Applicant: METHANOL CASALE S.A., 6900 Lugano-Besso (CH)
(72) Inventor: Rizzi, Enrico, 22070 Casnate con Bernate (CO) (IT); Filippi, Ermanno, 6976 Castagnola (CH); Tarozzo, Mirco, 6853 Ligornetto (CH)
(74) Representative: Zardi, Marco

(57) **Abstract**

Isothermal radial-flow chemical reactor (1, 100) comprising a heat exchanger (10, 110) in which the heating/cooling fluid side is divided into annular and concentric portions (R1, R2, R3; 121, 122, 123), which extend in respective regions of the reaction zone inside the reactor, and are provided with an independent supply and flow rate control. According to one embodiment, the heat exchanger comprises plates (11) with an internal chamber (15) further divided into channels (15a, 15b, 15c) starting from the fluid inlet side (16), with a mixing zone (21) in proximity of the outlet collector.

## Description

### Field of application

In its most overall aspect, the invention relates to the technical field of chemical reactors provided with an internal heat exchanger.

The invention applies in a particular manner to vapour generating radial isothermal reactors. Such definition shall be deemed referred to chemical reactors in which exothermal reaction is carried out, and the heat generated by the reaction is removed by a cooling fluid which, inside the exchanger, passes from the liquid state to the vapour state.

### Prior art

Different chemical reactors are known with at least one internal heat exchanger, adapted to provide or remove heat from the chemical reaction evolving in the reactor itself.

A typical example are the-so called isothermal or pseudo-isothermal reactors, in which the heat exchanger is fitted into a catalytic layer, inside the reactor, and used to keep the reaction temperature in a range of optimum efficiency (thus the origin of the term isothermal reactor) cooling or heating the reactants respectively in case of exothermic or endothermic chemical reaction.

Isothermal reactors are widely used, among others, in plants for the synthesis of methanol.

In reactors for exothermic chemical reactions, the use of the internal exchanger to produce vapour, typically water steam for energy use or for other process steps, is also known. For example, a chemical reactor provided with a pipe heat exchanger for the production of steam is known from US-A-4321234.

Furthermore, in the chemical reactors of the type taken into account, it is known to provide a plate heat exchanger, wherein the heat exchange elements are made of a plurality of box-shaped and flat-shaped parallelepiped bodies, called "plates". Said plates are essentially made of two walls connected to each other at least along the perimeter to define an internal chamber for the passage of a heat exchange fluid. A chemical reactor provided with a plate heat exchanger is known for example from EP-A-1284813.

Hereinafter the term "plate reactor" will be used for simplicity to indicate an isothermal chemical reactor provided with a plate heat exchanger of the type described above.

The plate reactor has various advantages compared to reactors provided with tube exchangers, including easy construction, exchangers easy to install, even in pre-existing reactors, availability of a large heat exchange surface with respect to the dimensions.

More in detail, the so-called radial isothermal reactors comprise a heat exchanger provided with a cylindrical-annular structure, in which the heat exchange elements (plates or tubes) extend parallel to the longitudinal axis of the reactor, usually vertical. In this type of reactor the reactant gas flow passes in a radial manner through the catalytic bed and the exchanger fitted therein, for example from the outer towards the inner of the reactor; the heating or cooling fluid flows inside the heat exchange elements, usually in a direction parallel to the axis of the reactor, from the bottom upwards or vice versa, or through a more elaborated path (for example a coil path) in such a manner to promote heat exchange.

In the plate radial isothermal reactors, the exchange plates are arranged in a radial manner in rays, with the long sides parallel to the axis of the reactor.

Said reactors, though advantageous in various aspects, have a technical problem still to be overcome effectively, substantially due to the non-uniformity of the thermal flow to exchange.

It should be noted that the thermal flow generated or absorbed by the chemical reaction depends on the reaction rate, and the reaction rate substantially depends on the chemical equilibrium, that is on the concentration of the reactants and concentration of the products. The reaction rate is maximum at the inlet section of the reactants in the catalytic bed, that is where there is the highest concentration of the reactants, and reduces through the bed itself, being lowest at the outlet section of the bed, where the concentration of the reactants (upon completion of the reaction) is minimum.

Hence, the thermal flow to exchange, in order to keep the reaction in isothermal or quasi-isothermal conditions, depends on the radial coordinate inside the reactor and more precisely inside the reaction zone, occupied by the heat exchanger. Said condition might lead to poor exploitation of the heat exchange surface available, and might cause further technical drawbacks, such as overheating of the catalytic bed, in case of isothermal reaction and a vapour generating exchanger.

As an example, reference is made to a radial isothermal plate reactor, as defined above, for an exothermic chemical reaction, wherein reactant gases flow horizontally in contact with the plates, from outer to inner of the reactor, and a cooling fluid, in this case water, evaporates inside the plates, flowing from bottom to top.

Due to the above reasons, the steam generation is more intense around the most external part of the plates (catalytic bed inlet), where the concentration of the reactants - and thus the reaction rate - is the highest. A non-uniform flow is generated in each plate, where the steam fraction tends to be higher close to the external edge of the plate. The steam-water flow tends to have a higher velocity in the external zone, where the steam content is higher, but the increase of velocity causes an increased pressure drops and, as a direct consequence, a reduction of the flow rate.

Thus, it can be understood that the flow rate tends to drop in the external part of the plate, just where the amount of heat to remove is maximum. Complete evaporation of the water in the most external part of the plate can occur, with a considerable deterioration of the cooling performance and - consequently - overheating of the plate and of the catalyst in contact with it. Generally, the water flow inside the plates differs, even significantly, from the conditions of the project.

Similar drawbacks can be encountered in reactors with pipe exchangers, in which the most external pipes must exchange a higher thermal power to generally maintain the isothermal reaction conditions desired. In the example of the vapour generating reactor, evaporation is higher in the most external pipes, adjacent to the inlet of the reactants in the catalytic bed, and thus these pipes are subject to higher pressure drops, lower coolant flow, with overheating of the bed.

### Summary of the invention

The problem underlying the invention is that of finding and providing a radial isothermal chemical reactor adapted to overcome the drawbacks and limits of the prior art described above. In particular, the invention intends to reduce or eliminate the abovementioned problems and risks caused by the non-uniformity of the heat load on the exchanger.

The problem is solved by an radial-flow isothermal chemical reactor, comprising a heat exchanger inside a substantially annular-cylindrical reaction zone, arranged to operate between an external flow of reactants, held in the reactor and passing through said reaction zone substantially in a radial direction, and an internal heating or cooling fluid, characterised in that:
- the heat exchanger comprises, on the internal fluid side, a plurality of portions extending in respective annular and concentric regions of the reaction zone, said portions being isolated from each other for at least a part of the axial extension of the exchanger;
- the exchanger is connected to respective feeding means of the internal fluid, independent for said portions of the exchanger itself. According to a known terminology, the term "fluid side" refers to the set of paths for the cooling or heating fluid defined by the heat exchange elements, that is the inside the tubes or plates.

According to an aspect of the invention, the heat exchanger has a generally annular and cylindrical structure, coaxial to the reactor and to the space of reaction therein defined. Preferably, the internal fluid passes through the exchanger with an axial or substantially axial flow, and thus perpendicular to the radial direction of the gases, for example vertical with an inlet provided in the lower zone of the exchanger and an outlet at the top. The path of the fluid may differ locally from the axial direction (e.g. coiled pipes) to promote heat exchange.

According to another aspect of the invention, the feeding means of the heat exchange fluid comprise means for independent control of the inlet flow rate in each of the portions of the exchanger as defined above. More preferably, for example, respective feeding pipes are provided for the various exchanger portions, and each pipe is provided with at least one shutter valve and one flow rate gauge downstream said valve.

In a first embodiment, the heat exchanger is a plate exchanger, the plates extending axially inside the reactor between a fluid inlet side and an opposite fluid outlet side; each plate defines a passage chamber of the heating or cooling fluid, which is further divided into channels starting from the fluid inlet side and for at least a part of the axial extension of the plate itself. Furthermore, said channels are fed separately, thus obtaining the partitioning of the fluid side of the exchanger into annular and concentric portions, separated from each other along a part of the longitudinal extension of the plate, and with independent control of the inlet flow rate.

Each plate, in further detail, is represented by a box-shaped body, plate-shaped, comprising two parallel walls joined by an edge joint and by further intermediate joints, thus obtaining said channels. According to a preferred construction, the plates are obtained substantially by two sheet walls welded along the peripheral edge, with further longitudinal weldings to define the partitions of the internal chamber, as will be more evident hereinafter with the help of an example.

According to further aspects of the invention, the intermediate joints extend, starting from the fluid inlet side of the plates, for a length shorter than the dimension of the plates themselves, defining a collecting zone of the heat exchange fluid in proximity of the outlet side. The plates are connected to separated distributors for the said internal channels, while a single collector is provided on the outlet side for the collection of the fluid from the mixing zone. This solution allows simplifying the collector.

In a second embodiment, the heat exchanger is represented by a tube exchanger, and the portions of the exchanger described above are represented by respective tube bundles disposed in annular and concentric regions of the reaction zone.

An objective of the invention is also a method for operating and exercising a reactor of the type taken into account, wherein the flow rate of the heat exchange fluid flowing into each of said portions of the exchanger is controlled in an independent manner.

The main advantage of the invention is the possibility to control the fluid flow rate in different radial regions of the exchanger. As a matter of fact, in this manner the non-uniformity of the heat absorbed or generated by the chemical reaction can be compensated for, and it is substantially easier to maintain the reactor under design operating conditions.

Such advantages are evident especially in a vapour generating isothermal reactor. In this case, the control of the flow rate, made possible by the partitioning of the exchanger into radial zones, allows avoiding the abovementioned problems of uneven flow rate (due to the generation of vapour concentrated in the external zone of the plate and thus enhancing pressure drops) and overheating of the catalytic bed.

The application of the of the invention to plate reactors, according to the embodiment which provides for plates with intermediate joints interrupted before the fluid outlet side, substantially obtains advantages analogous to the ones of a reactor provided with several concentric layers of plates, but without the complication deriving - for example - from the piping of the internal fluid and from the support system. In addition, it allows employing a single collector for the outflow of the heating fluid, and this is advantageous especially in the vapour generating reactors, as the diameter of the collector is relatively large due to low density of the vapour.

Characteristics and advantages of the present invention shall be more evident from the description, hereinafter provided for exemplifying and non-limiting purposes, with reference to the drawings attached.

### Brief description of the drawings

Fig. 1 schematically shows a cross-section of a radial isothermal chemical reactor and provided with plates, made according to the invention.
Figures 2 and 3 show schematic sections of a plate of the exchanger, according to lines II-II and III-III of Fig. 1.
Figure 4 shows in a schematic manner a cross-section of the reactor of Fig. 1.
Fig. 5 is analogous to Fig. 1, referring to a different embodiment with a pipe exchanger.

### Detailed description

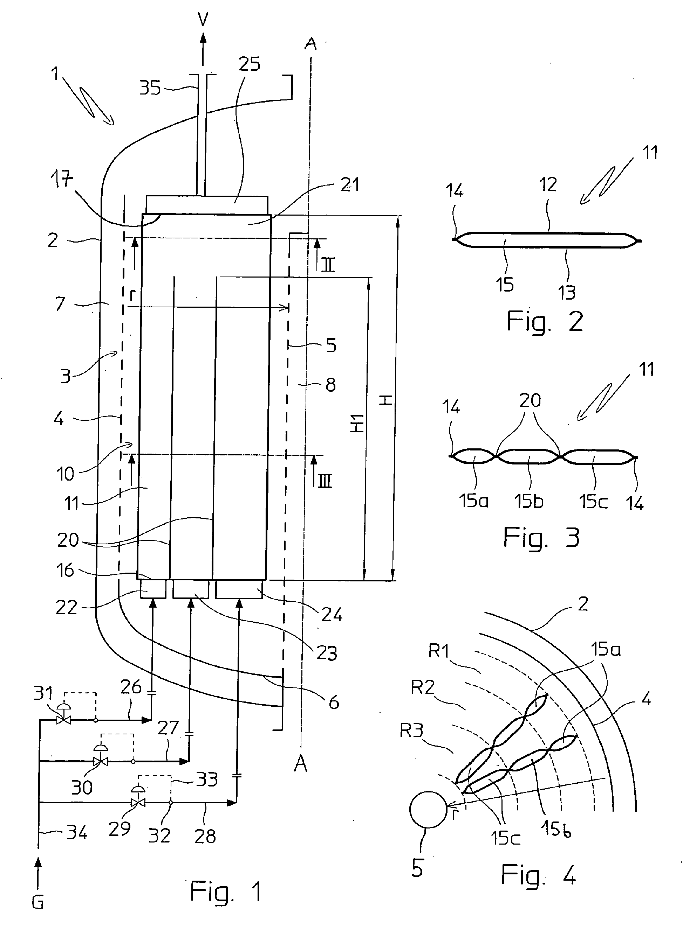

Fig. 1 refers to a radial isothermal chemical reactor, indicated in its entirety by 1, provided with an internal plate exchanger 10.

The reactor 1 essentially comprises a cylindrical shell 2, with vertical axis A-A, with respective lower and upper closure bottoms. Inside, it is provided with a catalytic basket 3, substantially cylindrical and annular, containing a catalyst mass. Said catalytic basket 3 is essentially made up of an external cylindrical wall 4, an internal cylindrical wall 5 and a bottom 6. The external wall 4 defines with the shell 2 a small gap 7 for the passage of a flow of reactant gases.

The walls 4 and 5 of the catalytic basket 3 are perforated to allow the passage of the reactant gases from the gap 7 through the basket 3 itself, and to allow the passage of gaseous reaction products from the basket 3 to a central collector pipe 8.

The reaction zone, inside the reactor 1, coincides with the annular-cylindrical space occupied by catalyst in the basket 3, and it substantially has a radial symmetry; therefore a radial coordinate r as shown in Fig. 1 can be defined.

The heat exchanger 10 fitted into the catalytic basket 3 has generally an annular-cylindrical structure, and comprises heat exchange plates 11 arranged in a ray-like manner, extended axially in the reactor 1, that is with the long sides parallel to the axis of the reactor itself, and radial short sides. Normally the reactor 1 is installed with vertical axis, and thus the plates 11 are also arranged vertically. The exchanger 10 is supported in a per se known manner.

Each plate 11 essentially consists in a box-shaped flattened body formed by two walls 12, 13 facing each other, for example made of steel, with an edge welding 14 which defines an internal chamber 15 passed through by a heating or cooling fluid (Fig. 2). The walls 12 and 13 are substantially two-dimensional, that is they have length and width considerably greater than the thickness, for example the length is some meters, the width is one meter; the thickness is a few millimetres.

In the example illustrated, the lower short side 16 of the plates corresponds to the fluid inlet side, where distributors 22, 23 and 24 are provided, while the opposite side 17 corresponds to the fluid outlet side,
where a collector 25 is provided.

Each plate 11 (Fig. 1 and 3) comprises further vertical weldings 20 between the walls 12 and 13, said weldings 20 being extended starting from the fluid inlet side 16 and up to a point in proximity of fluid outlet side 17. More in detail, the weldings 20 extend starting from the lower short side 16, for a length H1 smaller than the overall length H of the plate. Preferably, length H 1 is greater than 80% of length H; in preferred embodiments H1 is comprised in the range between 90% and 98% of H.

The intermediate weldings 20 make the internal chamber 15 partitioned into channels 15a, 15b and 15c, separated from each other, which extend starting from the inlet side 16 and for the length H 1 as shown in Fig. 1.

Due to the presence of said channels 15a - 15c adjacent to each other in each of the plates 11, the fluid side of the exchanger 10 is divided into radial partitions R1, R2 and R3 (Fig. 4) arranged in respective and different radial regions of the reaction zone, that is of the catalytic basket 3. In other words, said radial partitions occupy each a given range of the radial coordinate r.

Such partition extends along the length H1, starting from the fluid inlet side 16 and substantially along the lower and central part of the exchanger. Part R1 is formed by the outer row of the channels 15a of the various plates 11; part R2 is formed by the intermediate row of the channels 15b; part R3 is formed by the most inner row of the channels 15c. On the upper part, at a given distance from the fluid outlet side 17 and from the collector 25, the weldings 20 are interrupted, thus obtaining a fluid collection zone 21.

Preferably the radial width of the channels 15a, 15b and 15c is differentiated as shown in Fig. 1, that is channels 15a, arranged on a greater radius, have a smaller width than channels 15b, and channels 15b have a smaller width than channels 15c, thus obtaining cross passage sections substantially equivalent for parts R1, R2 and R3.

The radial partitions R1, R2 and R3 of the exchanger 10 are supplied separately and independently by means of the independent distributors 22, 23 and 24 (or independent sections of a single distributor) which separately supply the channels 15a - 15c of the various plates. The collector 25, downstream of the collection zone 21, is made of a single unit.

The distributors 22, 23 and 24 are fed by pipes 26, 27 and 28 each provided with a respective shutter valve 29, 30, 31 controlled for example with a flow rate signal from a gauge mounted on the pipe. The valve and the flow rate gauge are preferably identical for the pipes 26, 27 and 28; for simplicity the drawings show a flow rate gauge 32 emitting a flow rate signal (line 33) for controlling the valve 29.

The pipes 26, 27 and 28 are in turn connected to the a main pipe 34 for the inlet of the heat exchange fluid, for example water, indicated by G. At the opposite outlet side there is a pipe 35 which conveys the outflowing fluid, for example vapour, indicated by V.

As is clear to a man skilled in the art, the number of weldings 20 may vary, for example each plate may be provided with only one intermediate welding thus obtaining only two radial partitions, to facilitate construction, otherwise more than two intermediate weldings and hence providing four or more radial partitions of the exchanger can be provided.

According to another embodiment, not shown, the plates are essentially made with parallel and spaced flat walls, joined by edge spacers and further intermediate spacers, functionally equivalent to the weldings 14 and 20. This method of making the plates is advantageous, in particular, when the plates are required to bear high pressure differentials.

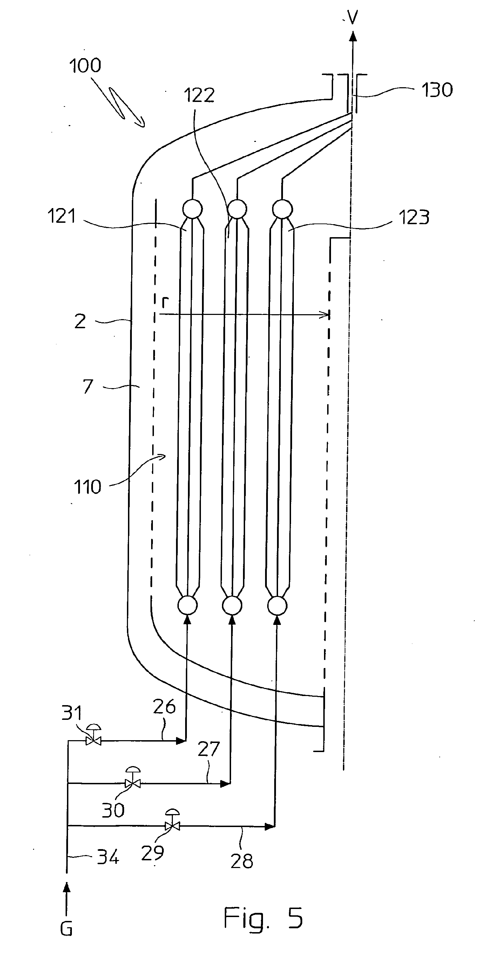

With reference to Fig. 5, a second embodiment is shown wherein the elements functionally equivalent to those of figures 1-4 are indicated by the same references.

The reactor 100 holds a tube heat exchanger 110, also with an overall annular-cylindrical structure, comprising annular tube bundles in respective and different annular concentric regions of the reaction zone; said tube bundles in the given (non-limiting) example are three and are indicated as 121, 122 and 123.

Said tube bundles are fed in a separate and independent manner through pipes 26, 27 and 28. The rate flow in the pipes 26-28, and thus in the pipe bundles 121-123, is determined by respective shutter valves 29-31 independent from each other; each of said valves is controlled for example by a flow rate signal emitted by a gauge (not illustrated), analogously to the description outlined above.

The heat exchange fluid, under operation, enters from pipe 34 and exits from a collector 130. It can be made up of a water flow G which, in a vapour generating exothermic reactor, heats up and evaporates absorbing the reaction heat and exits in the form of a steam flow V.

With reference to figures 1-4, the invention operates as follows. For exemplification purposes, it is assumed that the heat exchange fluid is water and that the reactor 1 is for an isothermal reaction, in such a way that the heat exchanger 10 serves to cool the reactants. In addition, it is assumed that the exchanger 10 is intended to generate vapour, using the heat from the reaction.

The reactants enter into the reactor 1 from the upper opening, and flow through the gap 7 and towards the central collector 8, passing through the catalytic bed 3 with a substantially radial path, along the direction defined by the coordinate r. The cooling water supplied by pipe 34, is divided into pipes 26, 27 and 28, with independent control of the flow rate of each one of them, and passes through the exchanger 10 vertically bottom-up (axial flow with respect to the reactor) evaporating under the effect of the reaction heat.

The heat generated by the reaction decreases with the radial coordinate r, being maximum at the catalytic bed inlet, and minumum at the outlet of the same bed. With reference to the example of Fig. 4 and to the three radial zones R1-R3 defined by the weldings 20, referring to average heat generated by the reaction in the abovementioned radial zones as Q, the condition Q(R1)>Q(R2)>Q(R3) arises.

The flow rate control, by regulating the valves 29-31, is made according to such non-uniformity of the heat Q variable depending on r, with the aim of maintaining the desired flow rate values in the channels 15a, 15b and 15c, and generally in the radial zones R1, R2 and R3 of the exchanger 10. For example, there will be a higher flow rate in the outer zone R1, subjected to a higher thermal load.

More in detail, a first implementation method of the invention provides for controlling the flow rate entering into each of the portions R1, R2 and R3, substantially constant and equal to a preset value, which can be different for the respective portions R1, R2, R3. For example, with reference to Fig. 1, such result is attained essentially by providing said set flow rate value as a set-up for the valves 29-31, controlled for example through a PID, and with a control of feedback through the flow rate sensors which detect the actual flow rate in the pipes 26-28.

According to another method of implementation of the invention, the flow rate control can be correlated to the distribution of temperature within the reaction zone. To this purpose, temperature sensors can be provided for, for example thermocouples, to measure the temperature in the reaction zone, in the shell side of the reactor 1, at different (at least two) radial positions. The distribution of temperature, thus measured, can be used to calculate the set-up value of the flow-rate of the valves 29-31.

Thanks to the invention, it is achieved a control of the cooling fluid flow rate substantially independent from the abovementioned variation of the reaction heat, eliminating the risk of the coolant flow rate being too low in the most critical zones of the exchanger, in particular in the outer radial zone R1, subjected to the risk of overheating.

The operation of a reactor of the Fig. 5 type is, in principle, the same. The flow rate of cooling water (or any other fluid) is controlled separately for tube bundles 121, 122 and 123, and it is made independent from the variation of the reaction heat which, similarly to the case of Fig. 4, is maximum at the bed inlet, that is around the outer bundle 121, and minimum at the outlet of the bed, that is around the inner bundle 123.

## Claims

1. Isothermal radial-flow chemical reactor (1, 100), comprising a heat exchanger (10, 110) inside an annular-cylindrical reaction zone, disposed to operate between an external flow of reactants, contained in the reactor and passing through said reaction zone substantially in a radial direction (*r*), and an internal heating or cooling fluid,
**characterised in that**:
- the heat exchanger (10, 110) comprises, on the internal fluid side, portions (R1-R3; 121-123) which extend in respective annular and concentric regions of the reaction zone, said portions of the fluid side of the heat exchanger being separated from each other for at least a part of the axial extension of the exchanger;
- the heat exchanger (10, 110) is connected to respective feeding means of the internal fluid (26-28), independent for said portions of the exchanger itself.

2. Reactor according to claim 1, wherein said feeding means of the internal fluid are associated to means (29-31) for controlling the inlet flow rate in an independent manner for each of said annular concentric portions of the heat exchanger (10, 110).

3. Reactor according to claim 2, wherein said feeding means of the internal fluid comprise a plurality of feeding pipes (26, 27, 28) for the heat exchange fluid for the respective annular portions of the exchanger (10), and each pipe is provided with at least one shutter valve (29, 30, 31) and a flow rate gauge downstream of said valve.

4. Reactor according to claims 1, 2 or 3, wherein the heat exchanger (10) is a plate heat exchanger (11); each of said plates (11) comprises an internal chamber (15) for the passage of the internal fluid, and it extends axially in the reactor (1) between a fluid inlet side (16) and an opposite fluid outlet side (17) ; the chamber (15) of each plate (11) is further subdivided into channels (15a, 15b, 15c) starting from the fluid inlet side (16) and for at least a part (H1) of the axial extension of the plate (11).

5. Reactor according to claim 4, wherein each plate (11) is represented by a box-shaped body, plate-shaped, comprising two parallel walls (12, 13) joined by an edge-joint (14) and by further intermediate joints (20), thus obtaining said channels (15a, 15b, 15c).

6. Reactor according to claim 5, wherein said intermediate joints (20) extend, starting from the fluid inlet side of the plates, for a length (H1) less than the axial dimension (H) of the plates (11), defining a collection zone (21) of the heat exchange fluid passing through said channels (15a, 15b, 15c) in proximity of the outlet side (17) of the plates.

7. Reactor according to claim 6, wherein the plates are connected, on the fluid inlet side, to fluid distributors (22, 23, 24) with separated supply for said internal channels (15a, 15b, 15c), and they are connected, on the fluid outlet side, to a single collector (25) for colleting the fluid.

8. Reactor (100) according to any one of claims 1 - 3, wherein the heat exchanger (110) is of the tube type, and comprises a plurality of tube bundles (121, 122, 123) which extend in respective annular and concentric regions of the reaction zone, connected to respective independent fluid supply pipes.

9. Method for operating a reactor (1) according to any of the preceding claims, wherein the heat exchange fluid is supplied in an independent manner to said portions of the heat exchanger (10, 110) of the reactor (1), and the flow rate of the heat exchange fluid flowing into each of said portions of the exchanger is controlled in an independent manner.

10. Method according to claim 9, wherein the flow rate of the heat exchange fluid entering each of said annular portions of the exchanger is maintained substantially constant and, for each of said annular portions (R1-R3), said entering flow rate is maintained equal to a respective preset value.

11. Method according to claim 9 or 10, wherein the flow rate of the heat exchange fluid entering each of said exchanger portions is determined according to the temperature distribution in the reaction zone.
